# EUROPEAN PATENT SPECIFICATION

(11) **EP 3 462 645 B1**
(45) Date of publication and mention of the grant of the patent: **23.06.2021**
(21) Application number: 18206707.4
(22) Date of filing: 23.09.2015
(51) Int. Cl.: H04B 17/10, G01R 23/16, H04L 27/00

(54) **FREQUENCY-CONVERTING SENSOR AND SYSTEM FOR PROVIDING AT LEAST A RADIO FREQUENCY SIGNAL PARAMETER**
FREQUENZKONVERTIERENDER SENSOR UND SYSTEM ZUR BEREITSTELLUNG MINDESTENS EINES FUNKFREQUENZSIGNALPARAMETERS
CAPTEUR ET SYSTÈME DE CONVERSION DE FRÉQUENCE PERMETTANT DE FOURNIR AU MOINS UN PARAMÈTRE DE SIGNAL DE FRÉQUENCE RADIO

(30) Priority: 06.10.2014 US 201462060189 P; 19.01.2015 US 201514599987
(43) Date of publication of application: 03.04.2019
(62) Divisional of application: 15186442.8
(73) Proprietor: Rohde & Schwarz GmbH & Co. KG, 81671 München (DE)
(72) Inventor: Bratfisch, Toralf, 85640 Putzbrunn (DE); Katzer, Michael, 80337 Munich (DE); Schmidt, Kurt, 85567 Grafing (DE); Thraenhardt, Marcel, 85354 Freising (DE); Reichel, Thomas, 77839 Lichtenau (DE)
(74) Representative: Körfer, Thomas

(56) References cited:
- US-A1- 2003 008 628
- US-A1- 2009 012 633
- US-A1- 2012 020 397

## Description

The invention relates to a frequency-converting sensor and a system for providing at least a radio frequency signal parameter, especially an electrical power value of the radio frequency signal.

There exist several different ways of analyzing a radio frequency signal, hereinafter referred to as RF signal.

One way of obtaining parameters of an RF signal is to detect the RF signal with a measurement device, such as a digital oscilloscope and/or a (scalar or vector) network analyzer. For instance, the document US 2009/0092177 A1 describes a vector signal measuring system featuring wide bandwidth, large dynamic ranges and high accuracy using a network analyzer. This system incorporates at least two receiver channels per measurement port to provide absolute magnitude and absolute phase relationship. A wideband signal supplied at a specific measurement port of the system is sliced into several frequency sub-bands, wherein each frequency sub-band is analyzed separately and is compared to a parallel reference frequency band of the supplied signal. The measurement is repeated for all sub-bands. This measurement method is very time-consuming and therefore not an attractive method for analyzing wideband signals.

Furthermore, these measurement devices are heavy, space-consuming, complex in its structure and highly cost-intensive, so that they are not flexible in their use. Those measurement devices need a calibrated measurement probe to detect the RF signal and direct it into the measurement device. Those probes lead to measurement errors and influence the characteristics of the RF signal, for instance caused by transmission and reflection losses of the probe due to its parasitic electrical parameters. Especially the moving of the probe and its respective cables during the detection of the RF signal lead to said measurement errors or inaccuracies which cannot be calibrated or corrected.

The accuracy of network analyzers or oscilloscopes is between 2 and 3 percent of the measurement signals magnitude. Due to their complex setup, such measurement devices comprise unacceptable ramp-up times. Due to the plurality of included modules those measurement devices have high measurement delays causing huge measurement times, especially for small powered input RF signals.

Another way of obtaining signal parameters of an RF signal is the use of specific signal sensors. For instance, the detection of an electrical power value of an RF signal is achieved by the use of so called power detection sensors which is known for example from DE 10 2008 052 335 A1. Mainly two different types of power detection sensors exist nowadays, namely diode-based detecting sensors and thermal-based detecting sensors. Those detecting sensors are directly coupled to the RF signal source and provide an electrical power value at its output. Disadvantageously the use of such sensors is very limited to very specific signal magnitudes. Signals below 100 Picowatts (-70 dBm) of average power are not detectable properly with such detectors. Especially sensors or detectors for sensing power signals with less than -20 dBm need noise compensation schemes due to their noise dependencies. Those noise compensations are normally realized by a reduction of measurement bandwidths at the output of the detector. An RF signal can therefore only be measured in a specific amount of measurement time.

Therefore, a power detection of RF signals with high dynamic power ranges cannot be detected without significant measurement errors or significant measurement times.

US 2003/0008628 A1 discloses a tuning arrangement in a radio receiver, the tuning arrangement including a front-end circuit having a tunable band-pass filter, which is capable of selecting channels within at least one frequency band of an RF signal in a tunable manner.

US 2012/0020397 A1 teaches systems associated with synthetic instrumentation. A reconfigurable synthetic instrumentation unit comprises an input module, with dual input/output ports and conditioning logic to condition an input signal.

It is therefore an objective to provide a sensor which overcomes the above mentioned problems and disadvantages, as defended in the independent claims of the appended claims. The dependent claims define additional embodiments.

Especially a sensor is needed, which can be used to analyze wideband radio frequency signals without a high risk of inaccuracy in the measurement result and also without time-consuming measurement methods.

Especially a sensor is needed, which can be used to analyze small power signals as well as high power signals without time-consuming measurement methods.

Especially a sensor is needed, which is configurable to its specific measurement task and which provides signal parameters of the RF signal for easy and further signal analysis. The sensor should provide signal parameters which are handled easily in remote or subsequent devices without further calculations.

Especially a noise-reduced sensor is needed, which accurately detects signals with very small power values, such as below -50 dBm without time-consuming measurement methods or complex structures.

The above mentioned objectives are especially solved by a frequency-converting sensor for providing at least a radio frequency signal parameter, especially an electrical power value. The sensor comprises an analog receiving section for converting an input signal into corresponding analog I/Q-values using a local oscillator frequency. This analog receiving section preferably converts the input signal using an I/Q-demodulation scheme at a local oscillator frequency. Thus, the RF input signal is converted into a corresponding In-phase component, hereinafter referred to as I-value, and Quadrature-phase component, hereinafter referred to as Q-value. The converted I/Q valued signal therefore is a complex-valued signal comprising magnitude and phase information of the input signal.

The sensor further comprises an analog to digital converting unit for converting the analog I/Q-values into digital I/Q-values.

Additionally, the sensor comprises a digital processing unit, which comprises an adjustable filtering unit for selecting a frequency band of the RF input signal. Preferably, the sensor can be operated in two modes. In the so called first operating mode that converts the RF input signal to an intermediate frequency, two receive-bands - the lower side band and the upper side band - are available for each local oscillator frequency. To avoid a superposition of the down-converted signals of both receive-bands in the intermediate frequency range one receive-band must be suppressed. This is achieved by the I/Q demodulation scheme. In the so called second operating mode of the sensor only one receive-band exists for a specific local oscillator frequency.

Using the I/Q demodulation scheme, both sidebands can be separated easily since they are not complex conjugated.

For further processing of the digitized I/Q-values only one sideband is chosen. Furthermore, the filtering unit filters the digitized I/Q-values, wherein the bandwidth and the type of filter curve is adjustable, so that the desired frequency band of the RF input signal is selected without distortion of single signal frequencies within this band or cutting off of desired frequency components of the RF signal. The filter bandwidth is adjustable, wherein a small band input signal can be filtered with the same high accuracy as if a wideband input filter would be selected. The use of an adjustable filtering unit leads to a sensor operable for highly dynamic ranged input signals in case of high powered RF input signals.

The digital processing unit further comprises a calculating unit for calculating at least an electrical power value from the digitized I/Q-values of the selected sideband. The calculating unit therefore preferably obtains at least a squaring unit for mathematically squaring the I-values and the Q-values. To obtain an electrical power value from a corresponding I/Q-value, a squared I-value has to be added to its corresponding squared Q-value. The corresponding power value is the envelope power value or at least a value proportional to the envelope power value of the RF input signal.

This power value is advantageously obtained using a digital processing scheme instead of using diode-based sensing elements with non-linear characteristics according to the prior art. Those diode-based sensing elements produce unwanted frequency components due to its non-linear behaviors that need to be deleted in a complex filtering procedure to avoid measurement errors. This complex filtering can be avoided using the inventive sensor. An analysis which uses sub-bands is impossible using prior art sensing elements, since those prior art sensing elements are only capable in measuring the total electrical power.

The sensor might obtain its energy supply via an I/O data interface, preferably a Universal Serial Bus interface and/or a local-area-network interface, such as Power on Ethernet, short PoE. Additionally or alternatively, an I/O data interface is advantageously used for a bidirectional data connection to transmit the digitized I/Q-values to an analyzing measurement device, such as a vector network analyzer or a display device. Alternatively or additionally, the I/O data interface comprises a web-interface to transmit web-based content to a remote display device. In such an embodiment, the display device does not necessarily need a data conversion unit for further analyzing of the data.

Additionally, sensing elements comprise longer measurement-times especially if wideband signals are used, e.g. for spectral analyzers or the inventive sensor device.

The calculating unit of the digital processing unit preferably comprises an integrating unit, arranged downstream to the squaring unit. At the output of the integrating unit a mean power value is obtained. An integration period is preferably equal to one time period of the envelope of the input signal or an integer multiple thereof.

Preferably the calculating unit of the digital processing unit further comprises an averaging unit, arranged downstream to the integrating unit to obtain an averaged power value, which is a calculation to analyze the obtained mean power values by creating a series of mean power values at different subsets of the digitized I/Q-values. The obtained series of mean power values are averaged to obtain an averaged mean power value.

The digital processing unit preferably is a digital signal processor, DSP, or a digital central processing unit, CPU.

The frequency-converting sensor is advantageously used for power detection. Therefore, the radio frequency signal within the selected receive band is down-converted using a local oscillator frequency and an I/Q demodulation scheme. The resulting analog I/Q signals are digitized using an analog to digital converter. The digitized I/Q values can now be handled in a digital processing unit and the power value can be computed using the sum of each squared I-value and Q-value.

Since the radio frequency signal is converted into digitized I/Q values, the magnitude and phase information of the RF signal are both provided and a selective vector measurement analysis can also be applied. Therefore the sensor according to the invention can be used for a plurality of analyzing purposes, for instance power detection, transmission/reflection losses, magnitude and phase analysis. Especially the S-Parameters of a device under test, generating and/or transmitting the RF-signal can easily be analyzed with the inventive sensor. Due to its digitized I/Q values all necessary calculations in the digital processing unit do not suffer from limitations derived from the analog signal processing.

The sensor itself is very compact and therefore directly coupled to a device under test without extra measurement probes or measurement cables. This leads to higher accuracy of the measuring results.

In a preferred embodiment, the frequency-converting sensor is operable in at least a first operating mode and a second operating mode, wherein the modes are selectable. The selection of a specific mode is dependent on specific signal parameters. This leads to an efficient analysis of the RF signal.

In a preferred embodiment, the second operating mode is used for input signals with an electrical power above a predefined threshold value. In case of RF signals above a predefined threshold value, measurement errors due to local oscillator leakage, 1/f-noise and/or DC-offsets in the analog I/Q paths can be ignored since their influence to the measurement result is not significant.

In a preferred embodiment the second operating mode is used for input signals comprising a bandwidth higher than the bandwidth of the intermediate frequency of the intermediate frequency path of the sensor in the first operating mode. Such wideband input RF signals normally are analyzed by dividing the wideband signal frequency in several frequency sub-bands, selecting a specific frequency sub-band of the input RF signal, performing an analysis at the selected frequency sub-band and storing the measurement result. Afterwards, a reselection of an adjacent frequency sub-band occurs and the steps of analyzing and storing are repeated. This procedure is continued until the complete wideband signal has been analyzed. Such a sub-band-shifting analysis is time-consuming and inaccurate when combining the single sub-band results. To avoid those drawbacks it is advantageous to switch to the second operating mode, wherein at least the filtering unit of the digital processing unit is deactivated, leading to a higher analyzing bandwidth of the sensor. Additionally and/or alternatively, also an anti-aliasing filter unit in the analog receiving section is deactivated to further increase the analyzing bandwidth of the sensor.

Additionally and/or alternatively, the analog conversion is applied using the second operating mode instead of a double sideband demodulation scheme according to the first operating mode. Using the second operating mode, the signal is symmetrically arranged around zero hertz which allows a handling of the RF signal with higher bandwidths compared to prior art sensors.

In a preferred embodiment the digital unit further comprises a frequency shifting unit for digitally shifting the digital I/Q-values, wherein the frequency shifting unit is arranged in between the analog to digital converting unit and the filtering unit. The frequency shifting unit shifts a mid-frequency of a sideband of the digitized I/Q-valued input signal from the positive or negative intermediate frequency to zero hertz. This frequency shifting advantageously leads to the shifting of unwanted frequency components such as DC offsets and oscillator leakage into the positive or negative frequency spectrum. By adjusting of an appropriate small bandwidth of the filtering unit, those unwanted frequency components can now be filtered out easily. Since the shifting occurs in the digital processing unit, the shifting is a simple mathematic operation and not an analog complex mixing operation, which leads to further inaccuracies.

In a preferred embodiment, the shifting frequency is equal to the positive or negative intermediate frequency. This advantageously leads to a centric shifting of the selected receive-band and allows easy analyzing operations afterwards.

In a preferred embodiment, the frequency shifting unit is only activated during the first operating mode of the sensor, since the second mode preferably obtains a single sideband conversion scheme and therefore is converted centrically at zero hertz after the analog receiving section.

In a preferred embodiment, the analog receiving section comprises an anti-aliasing-filter, wherein the anti-aliasing filter is preferably activated during the first operating mode of the sensor. The anti-aliasing filter is necessary to filter out unwanted frequency spectrum components that would lead to an ambiguous representation of the RF input signal.

The sensor further comprises a local oscillator frequency signal interface for applying the local oscillator frequency signal to the sensor. Thus a highly accurate local oscillator frequency can be applied leading to a higher accuracy of the signal analyzing procedure. In case of using at least two sensors for transmission and/or reflection losses the RF signal is converted at the same local oscillator frequency, which avoids local oscillator frequency signal offsets resulting in measurement errors. Especially the S-Parameters of a device under test, generating and/or transmitting the RF-signal might be analyzed therewith.

In a preferred embodiment, the sensor comprises a first signal interface for applying the input signal, a second signal interface for providing the corresponding power value of the input signal and at least a third interface for providing the digitized I/Q-values for further signal analyzing. The provision of digitized I/Q-values allows analyzing of the magnitude, the phase as well as transmission/reflection losses of the input RF-signal.

In a preferred embodiment, the sensor comprises a fourth interface for providing and/or applying a system-clock signal and/or a triggering signal and/or a reference signal and/or a local oscillator signal. Those inputs are advantageously incorporated for phase-synchronal measurements such as transmission/reflection losses of a signal path transmitting the RF signal.

The above identified objectives are further solved by a system for analyzing a radio frequency signal. The system comprises a device under test, which generates the radio frequency signal. The system further comprises at least a frequency-converting sensor as described above, which provides at least a radio frequency signal parameter, especially an electrical power value. The system further comprises a display device configured to display said radio frequency signal parameter.

Preferably, the device under test is directly connected to a first interface of the at least one frequency-converting sensor. Therefore, no measurement probes or measurement cables are needed to provide the RF signal at the at least one sensor. The influence of parasitic elements of said probes and cables is therefore avoided and the measurement accuracy is further increased.

In a preferred embodiment, the display device is connected in a contactless or contact-based manner to a second interface of the at least one frequency-converting sensor. This allows a presentation of the detected and/or analyzed signal parameters to the display unit without further calculations or processing steps.

In a preferred embodiment, the display device is incorporated into a measurement device, preferably a network analyzer, and the at least one frequency-converting sensor further provides digitized I/Q-values via the second interface or via a third interface. The I/Q-values might be presented by a web-interface in a web-based manner to allow remote display devices and/or measurement instruments to display the detected and analyzed signal parameters.

In a preferred embodiment, the at least one frequency-converting sensor is a first frequency-converting sensor, wherein the system comprises at least a second frequency-converting sensor. The first sensor supplies a trigger-signal to the second sensor or vice versa. The first sensor supplies a system clock-signal to the second sensor or vice versa. The first sensor supplies a local oscillator frequency-signal to the second sensor or vice versa. The system is used for vector-based measurements. In this system no further analyzing measurement device is needed and not only scalar values are obtained. Thus, I/Q value pairs are obtained, which are time-aligned. Due to the provision of digitized I/Q-values a measurement of phase-related values is now possible.

By the use of two sensors, a vector measurement result is obtained, which leads to the possibility of analyzing the S-Parameters of the device under test, generating and/or transmitting the RF-signal.

In a preferred embodiment, the at least one frequency-converting sensor is a first frequency-converting sensor, wherein the system comprises at least a second frequency-converting sensor. The first sensor supplies a trigger-signal to the second sensor or vice versa. The first sensor supplies a system clock-signal to the second sensor or vice versa. This system is used for time-domain system measurements.

In a preferred embodiment, a reference signal is provided to the first sensor or the second sensor. The reference signal might be used to stimulate the device under test and analyze the device under test under test conditions. Alternatively, the device under test is tested under real receiving and/or sending conditions.

In a preferred embodiment, the at least one frequency-converting sensor is a first frequency-converting sensor, wherein the system comprises at least a second frequency-converting sensor. The first sensor supplies a trigger-signal to the second sensor or vice versa. The reference signal is provided to the first sensor and the second sensor. The system is used for time-domain system measurements.

In an alternative embodiment, the display device is incorporated into a measurement device. The at least one frequency-converting sensor is a first frequency-converting sensor, wherein the system comprises at least one second frequency-converting sensor. The first sensor and the second sensor further provide digitized I/Q-values for a coupled system-time measurements to the measurement device. The trigger signal, system-clock signal and local oscillator frequency signal is generated by the measurement device and provided to the sensors by a data interface.

The inventive sensor is highly precise and analyzes RF signals on an I/Q-valued signal basis. Therefore, the sensor and the system are useful for power detection, vector network analysis, and spectral analysis as well as signal analysis per se.

The inventive sensor combines high precision measurements with very limited measurement setup but high precise sensitivity.

The inventive sensor provides envelope power values of signals with pulse rise time less than two nanoseconds.

Due to an I/O data interface the sensor is remotely configurable and provides the analyzed signal parameter in a web-based manner.

Due to the direct coupling of the sensor to the DUT, no parasitic influences of a connecting cable are encountered and a proper matching without mismatch-influences occurs compared to spectrum analyzers or measurement receivers.

Due to the simple structure of the inventive sensor, the lifespan of the sensor is highly increased in comparison to other frequency-converting measurement devices, such as spectrum analyzers.

Due to less analog components in the measurement setup, the sensor is less temperature- and/or time-dependent. The sensor is very robust, handy, small and light.

Compared to conventional sensors, the analyzing bandwidth is an additional parameter which can be adjusted by the user or automatically selected by the sensor itself, whereby two different receiving modes are selectable. The measurement noise is only square root dependent in comparison to conventional sensors with a proportional dependency from the inverse power. Power values are only measured at the fundamental signal frequency instead of the fundamental signal frequency and all harmonics.

If a broadband measuring is desired, the second operating mode might be used, wherein the first operating mode is useful for highly accurate measurement results.

Exemplary embodiments of the invention are now described with reference to drawings. Those exemplary embodiments do not limit the scope of the invention, which is defined in the appended claims. Equal reference signs in different drawings indicate equal elements or at least equal functions unless otherwise stated. In the drawings:
- Fig. 1: shows a first exemplary embodiment of a sensor according to the invention;
- Fig. 2: shows a second exemplary embodiment of a sensor according to the invention;
- Fig. 3: shows a first exemplary embodiment of a system according to the invention;
- Fig. 4: shows a second exemplary embodiment of a system according to the invention;
- Fig. 5: shows a third exemplary embodiment of a system according to the invention;
- Fig. 6: shows a detailed block diagram of a third exemplary embodiment of a sensor according to the invention with resulting frequency spectra;
- Fig. 7: shows a detailed block diagram of a fourth exemplary embodiment of a sensor according to the invention with resulting frequency spectra;
- Fig. 8: shows two exemplary frequency spectra according to the particular operating mode of the sensor according to the invention;
- Fig. 9a-c: show characteristic curves of a filtering unit according to the invention;
- Fig. 10: shows a signal frequency tracking scheme according to the invention;
- Fig. 11: shows a comparison of the specific temperature-dependent noise power between a known power detector and the power detection mode of the sensor according to the invention;
- Fig. 12: shows a noise scheme of the inventive sensor at a low input power level;
- Fig. 13: shows a noise scheme of the inventive sensor at a high input power level;
- Fig. 14: shows a measurement noise scheme of the inventive sensor at different filtering bandwidths B_{RF} and with different measuring times;
- Fig. 15: shows a measurement time scheme of the inventive sensor at different filtering bandwidths B_{RF} of a continuous wave signal;
- Fig. 16: shows a measurement time scheme of the inventive sensor at different signal bandwidths of an Additive White Gaussian Noise signal and
- Fig. 17: shows a power measurement range of the inventive sensor in trace-mode.

In this application, the following abbreviations are used:
- |x|²: Squaring Unit
- ∫: Integration Unit
- Σ: Averaging Unit
- 1a,b: Sensor
- AAF: Anti-Aliasing Filter
- ADC: Analog-Digital-Converter
- B_{RF},: Bandwidth of adjustable filtering unit
- B_{N}, Bₙₒᵢₛₑ: Bandwidth of noise (RF noise)
- Bₚₐₛₛ: Passband of adjustable filtering unit
- Bₛₜₒₚ: Stopband of adjustable filtering unit
- B_{3dB}: 3dB Bandwidth of adjustable filtering unit
- CLK: System Clock Signal
- DPU: Digital Processing Unit
- DUT: Device under Test
- f: Frequency
- f_{if}: Intermediate Frequency
- f_{Lo}: Local Oscillator Frequency
- fₛₜₒₚ: Stop frequency of adjustable filtering unit
- I: In-Phase-Component
- LAN: Local Area Network
- LO: Local Oscillator Signal
- LSB: Lower Side Band
- Pₛ(t): Power Signal
- P_{N}: Power of Noise
- Q: Quadrature-Phase-Component
- Ref: Reference Signal
- S(f): Power density spectrum
- s(t): Input Signal
- T_{Sensor}: Absolute temperature [K]
- T_{Source}: Absolute temperature of DUT
- T_{ref}: Reference temperature
- K_{S}: Boltzmann konstant
- Trig: Trigger Signal
- USB: Upper Side Band
- Φ_{SS}: Spectral Power Density of measurement result
- F: Noise Factor

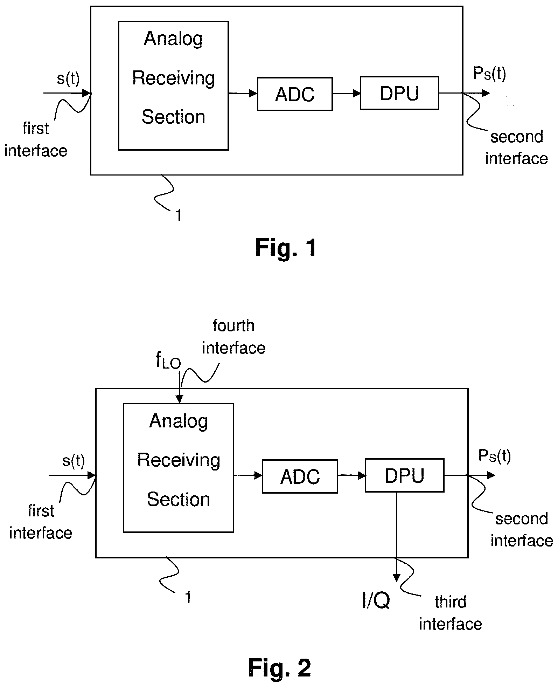

Fig. 1 shows a first exemplary embodiment of a sensor 1 according to the invention. The sensor comprises a first interface for applying an RF input signal s(t). The sensor 1 further comprises an analog receiving section, an analog-to-digital conversion unit ADC and a digital processing unit DPU. The sensor 1 further comprises a second interface for providing at least a signal parameter of the RF signal s(t). In Fig. 1 the at least one signal parameter is a power value Pₛ(t).

In Fig. 2 a second exemplary embodiment of a sensor according to the invention is shown. The sensor according to Fig. 2 is equal to the sensor according to Fig. 1. Additionally to the inventive sensor 1 of Fig. 1, the sensor 1 of Fig. 2 comprises a third interface for providing digitized I/Q-values and a fourth interface for supplying or providing a local oscillator frequency f_{LO}. Those digitized I/Q-values are useful for further RF signal analysis, such as S-Parameter calculation, vector network analysis and/or frequency analysis since the inventive sensor 1 provides magnitude and phase information of the input RF signal using digitized I/Q-values.

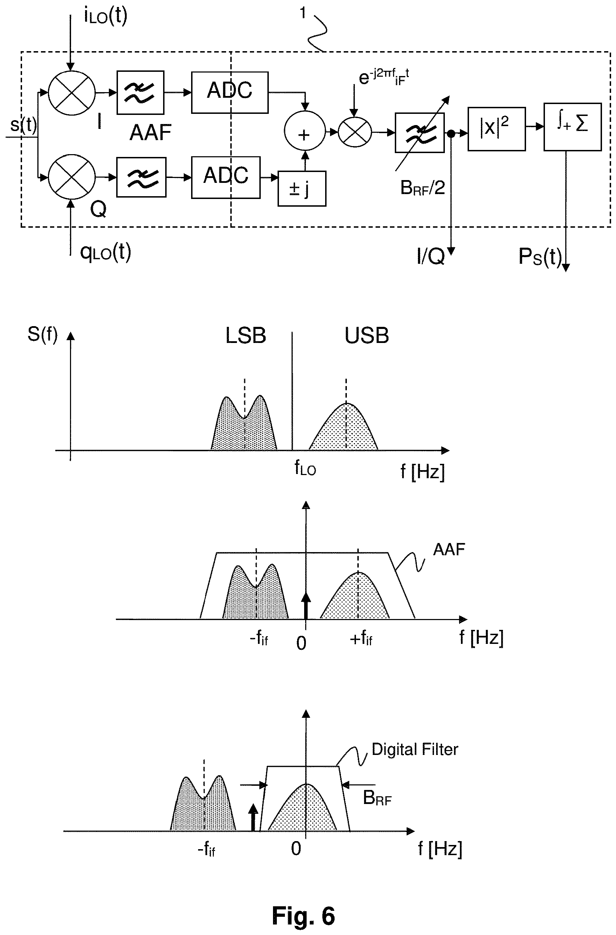

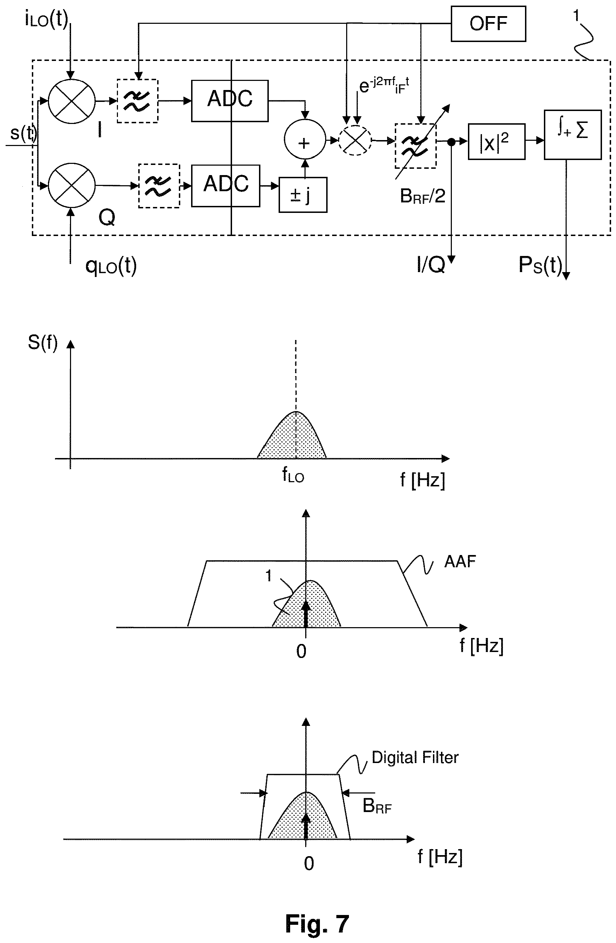

The inventive sensor operates in at least a first operating mode - so called normal receiving mode - or in a second operating mode - so called Zero IF mode. Both modes will be described in greater details according to Fig. 6 and Fig. 7.

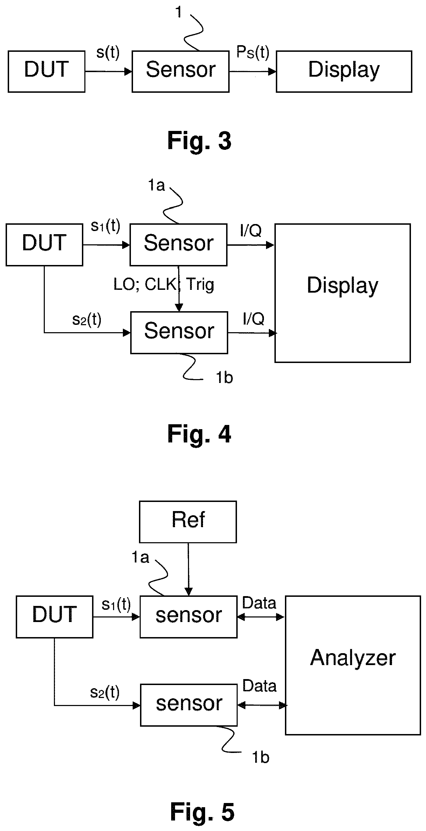

Fig. 3 shows a first exemplary embodiment of a system according to the invention. The system comprises a device under test DUT, at least an inventive sensor 1 and a display unit. The DUT generates an RF signal s(t), which is supplied to the sensor 1. The sensor provides at least a power value Pₛ(t), which is obtained from the RF signal s(t) to the display unit. The display unit presents the power value. In the embodiment according to Fig. 3 the sensor 1 provides the power value Pₛ(t) in a manner that no further calculations or processing are needed.

Therefore, the display unit according to Fig. 3 can be a simple screen display or a LCD-display device that converts the digital values into human-readable data.

The signal parameters, in particular the power value Pₛ(t), can alternatively be provided via a data interface, e.g. a universal serial bus or a local area network interface LAN, such as Gigabit-LAN. Thus the data can be presented to a web frontend which is arranged remotely to the DUT and the sensor 1. Therefore, the digital processing unit DPU comprises a web interface for such a data presentation.

The sensor 1 is supplied from an external power source (not shown). This power source might be interfaced to the sensor by a specific power interface or in an advanced embodiment, one of the data interfaces, such as universal serial bus interface USB or local area network LAN, supply the sensor with the appropriate power. For instance, a Power on Ethernet PoE power supply is incorporated into the sensor 1.

Furthermore a specific system-clock might be presented via the data interface.

In Fig. 4 a second exemplary embodiment of a system according to the invention is shown. Therein at least a second sensor 1b is incorporated into the system. The first sensor 1a is connected to the second sensor 1b via the fourth interface. The fourth interface comprises at least one of the following signals: trigger signal TRIG, system-clock signal CLK, and/or a local oscillator signal LO. The first sensor 1a is the master sensor in the system and supplies at least one of the TRIG, CLK, LO signals to the at least second sensor 1b. The sensor 1b obtains the at least one signal from the sensor 1a via a fourth interface and thus is a slave sensor. The master sensor 1a is interchangeable with the slave sensor 1b due to their totally equal setup. The system is not limited to two sensors 1, further sensors 1 can be incorporated into the system for further signal parameter analyzing purposes. The first sensor 1a obtains a first RF input signal s₁(t). The second sensor 1b obtains a second RF input signal s₂(t).

Following some specific scenarios for signal parameter analysis are possible according to Fig. 4 and described hereinafter.

In a first scenario of Fig. 4, the master sensor 1a provides a trigger signal TRIG, a system-clock CLK, and a local oscillator signal LO. Those signals TRIG, CLK, LO are needed for a vector measurement of the device under test DUT. As a conclusion, true-life measurements can be applied. In case the DUT is a sending or receiving section of a radio device, it is now possible to simply activate the DUT and measure the DUT under real working conditions, so called true-life-scenario. The system behaves like a multi-channel vector network analyzer but is less expensive, less complex and more accurate. Additionally, also the measurement of pulsed input RF signals is possible. The accuracy of S-parameter detection is highly increased in comparison to a scalar measurement, the measurement is quicker and complex transmission parameter can be obtained.

Optionally a reference signal REF is applied to either the first sensor 1a or the second sensor 1b. The reference signal REF provides an external connection to a classical 10 MHz reference signal source to synchronize the time basis of the device under test DUT and the sensors 1a, 1b. The reference signal REF is optionally used for internal calibration of the sensor 1 and for aligning the sensors 1a, 1b to environmental parameters.

In a second scenario of Fig. 4, the master sensor la provides the slave sensor 1b with the trigger signal TRIG and the system clock CLK. In this scenario phase-corrected measurements are possible without a digital trigger oscilloscope or another analyzing measurement device.

In a third scenario of Fig. 4, the master sensor 1a provides the slave sensor 1b with the trigger signal TRIG and the reference signal REF. In this scenario phase corrected measurements are possible without a digital trigger oscilloscope or another analyzing measurement device.

To provide a TRIG signal, the sensor 1 comprises a trigger circuit, which detects a trigger event and generates a trigger impulse. This trigger impulse aligns all sensors 1a, 1b in the system and avoids measurement time offsets.

To provide a CLK signal, the sensor 1 obtains an internal oscillator circuit for generating the system clock signal CLK. This CLK signal is provided to all sensors 1a, 1b in the system to obtain no measurement errors due to a system CLK frequency offset.

To provide a LO signal, the sensor 1 comprises an internal oscillator source and further obtains input parameters to set up a LO frequency signal, provided to each sensor 1a, 1b in the system to prevent measurement errors due to an LO frequency offset.

Fig. 5 shows a third exemplary embodiment of a system according to the invention. The system according to Fig. 5 also comprises at least two sensors 1a, 1b. Instead of the provision of the trigger signal TRIG, the system-clock CLK, and a local oscillator signal LO, both sensors 1a, 1b are coupled to an analyzing device which incorporates the display unit. The analyzing device further provides the appropriate TRIG, CLK and/or LO signals to the both sensors for vector measurements. Using the system according to Fig. 5 no measurement probes or cables for interconnecting the DUT and the analyzer are needed which highly increases the measurement accuracy. The data interface DATA between the sensors 1a, 1b and the analyzer device provide digitized I/Q-values to the analyzer for further signal analysis.

Fig. 6 shows a detailed block diagram of a third exemplary embodiment of a sensor according to the invention with resulting frequency spectra. The embodiment according to Fig. 6 shows the first operating mode of the inventive sensor 1.

The RF signal s₁(t) is applied at the first interface of the first sensor 1a. The second sensor 1b obtains a second RF input signal s₂(t). An appropriate spectrum S(f) of the RF input signal s(t) is also illustrated in Fig. 6.

The analog receiving section is placed downstream to the first interface, wherein the analog receiving section comprises an I/Q-demodulator for converting the RF input signal frequency upper sideband USB and lower side band LSB, located at f_{LO} to an intermediate frequency band f_{if} using a local oscillator signal f_{LO}.

The local oscillator signal f_{LO} is an analog signal, which is generated from an reference signal REF in the digital processing unit in a phase-synchronic manner so that the analog mixing occurs phase coherent to the further signal processing.

The resulting analog In-phase value I and Quadrature-phase value Q are each provided to an analog anti-aliasing filter AAF to eliminate unwanted frequency components of the RF input signal that would prevent an ambiguous presentation of the RF input signal in the time or frequency-domain.

An upper receive-band USB and a lower receive-band LSB are obtained after the conversion each arranged at an intermediate frequency f_{if}, as shown in Fig. 6 in the middle spectrum diagram, also showing the characteristic curve of the analog anti-aliasing filter AAF.

The analog anti-aliasing filtered I/Q signals are provided to separate analog-to digital converters for obtaining digitized I/Q-values. Afterwards the digitized I/Q values are used to build a complex signal in the real and in the imaginary part, which comprises both receive-band information. Multiplying the complex number with complex sine waves at the negative intermediate frequency f_{IF} shifts the whole frequency spectrum to negative frequencies by an amount of the intermediate frequency f_{IF}. A typical intermediate frequency is 30 Megahertz. The result of the shifting is shown in the lower frequency spectrum of Fig. 6.

The shifting unit is used to eliminate the DC offsets and the added pink noise, also referred to as 1/f-noise, of the hardware components of the sensor 1 as well as the local oscillator leakage which are represented as a DC-peak in the middle frequency spectrum of Fig. 6. This DC-peak is a parasitic component of the frequency spectrum and is not included in the original RF input signal. Due to the aforementioned shifting process the unwanted components fall outside the path band of the analyzing filter and will therefore not influence the input measurement results.

An adjustable filtering unit is arranged downstream to the frequency shifting unit. The adjustable filtering unit selects the frequency band of the input signal to be measured. The resulting bandwidth B_{RF} is adjustable as well as the mid-frequency. In a tracking mode of the sensor, the resulting mid-frequency follows an unwanted frequency shift of the signal frequency for proper analysis. A calculating unit - here illustrated as squaring unit |x²|, integration unit ∫ and averaging unit Σ are arranged downstream to the filtering unit to obtain the respective envelope power value, the mean power value as well as the averaged mean power value, as described above.

In case the video bandwidth B_{vid} of the RF input signal s(t) is small, e.g. less than one Hertz, a measuring time can be reduced if the first mean power value is displayed, wherein in the background an averaging occurs. Whenever an updated power value is calculated, the display obtains the updated value for displaying purposes.

As a result, the averaged power value Pₛ(t) is obtained at the second interface of the sensor. Additionally, the digitized I/Q values are presented at the third interface of the sensor 1 for further network analysis, signal analysis or magnitude/phase analysis of the RF input signal.

Fig. 7 shows a detailed block diagram of a fourth exemplary embodiment of a sensor according to the invention with resulting frequency spectra. In principle the structure of the sensor 1 according to Fig. 7 is equal to the structure of the sensor 1 according to Fig. 6. In Fig. 7 the second operating mode of the sensor 1 is exemplarily shown, which should be activated-by wideband and/or RF input signals with significant power values only. In the following only the differences to the embodiment according to Fig. 6 are described. The sensor 1 is switchable between the first operating mode and the second operating mode using a switch. The switch is activated by the user or in an automatic manner whenever the signal parameter crosses a pre-defined threshold. The modes are selected on a user's choice or during the analyzing of the RF input signal. All components of the sensor 1, which are deactivated during the second operating mode, are shown with dotted lines. Using the other demodulation scheme the signal is symmetrically arranged around zero hertz which allows an easier handling of the RF signal without time-consuming measurements. This leads to a spectrum S(f) of the RF signal s(t) as shown in the upper frequency spectrum. This leads to a single receive band, which is represented by a spectrum S(f) of the RF input signal.

In the middle frequency spectrum of Fig. 7 the corresponding anti-aliasing filter curve is illustrated. To increase the input bandwidth of the filter, this anti-aliasing filter AAF is preferably switched off, too using the second operating mode.

Also the shifting unit is switched off, since the appropriate spectrum of the signal is already at zero Hertz, thus the DC leakage is not removed from the frequency spectrum. The adjustable filtering unit can optionally be switched off too.

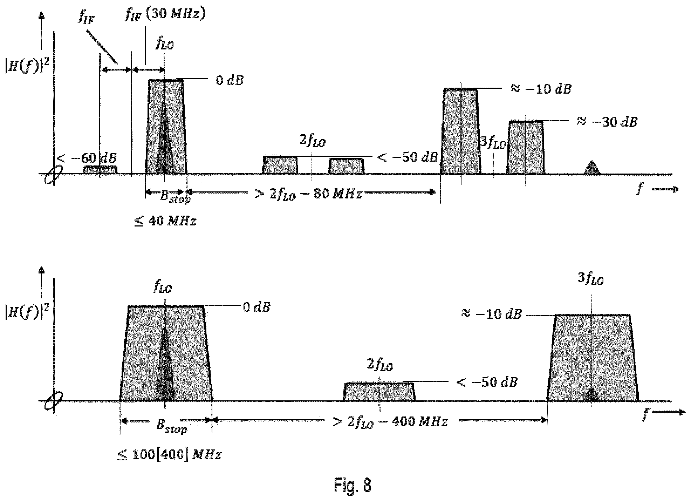

In Fig. 8 the receive bands according to the particular operating mode of the sensor according to the invention are shown.

In the upper part of Fig. 8, the resulting sensitivity versus frequency according to the first operating mode (see Fig. 6) is shown. The analog conversion generates noise bands at each integer-multiple of the local oscillator frequency, f_{LO}, 2*f_{LO}, 3*f_{LO}. By definition integer-multiple harmonics of the RF input signal do not fall into the receive band, as shown in Fig. 8 upper part. The spectral parts of the local oscillator signal f_{LO} do not prevent the spectral components of the RF input signal to be measured, since they are not placed at an integer-multiple of the local oscillator frequency. As a conclusion, the converted signal does not include unwanted frequency spectrum components and only the RF signal itself is selected and only the fundamental wave is selected.

The lower part of Fig. 8 shows the resulting sensitivity versus frequency according to the second operating mode (see Fig. 7). Here the third integer-multiple 3*f_{LO} of the local oscillator is equal to the third harmonic of the RF input signal which results in an influence of the third harmonic of the RF-signal s(t) in the second mode of the sensor 1. Since the signal parameters should be analyzed without any harmonics of the RF signal, those frequency components need to be filtered.

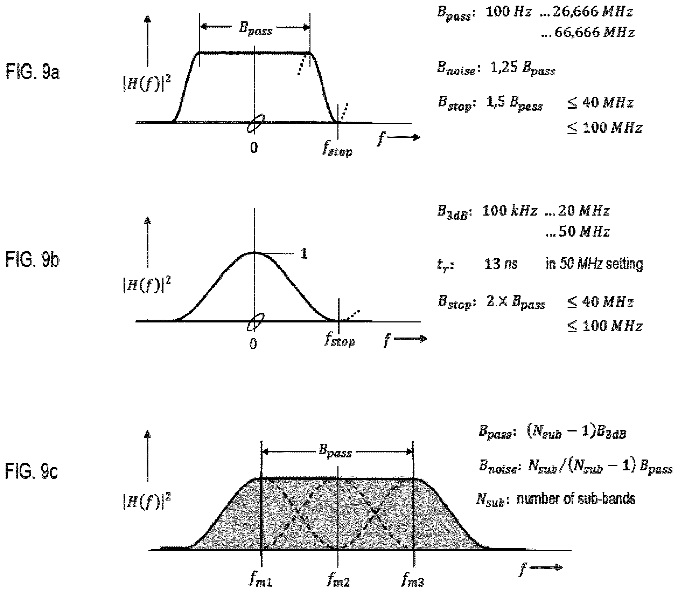

In Fig. 9a to Fig. 9c, characteristic curves of a filtering unit according to the invention are shown. The characteristic curves of the filtering unit are adjustable to the specific measuring task to obtain the most accurate measuring result.

In Fig. 9a, the filtering unit type is a root-raised-cosine filter with a roll off factor of 0.2. This is the ideal filter type for mean power values since all spectral parts of the RF signal are detected and weighted equally for further calculations.

In Fig. 9b, the filtering unit type is also a cosine filter but with a cosine roll off factor of 1. This is the ideal filter type for time-based measurements at edged signals, since such a filter type does not overshoot, so in case of envelope power values no distortion of spectral parts of the RF signal is obtained for further calculations.

In Fig. 9c, the filtering unit type is also a cosine filter with a cosine roll off factor of 1. Due to a wideband character of the RF signal the filtering unit needs to obtain an adjustable mid-frequency fₘ, which is shown in Fig. 9c (dotted lines) at curves fₘ₁, fₘ₂ and fₘ₃. Fig. 9c shows an assembled measurement using 3 sub-bands, so N_{sub} is 3. This type of filter is ideal for mean power values of a wideband RF signal, because the sub-bands merge to a frequency band with flat amplitude responses.

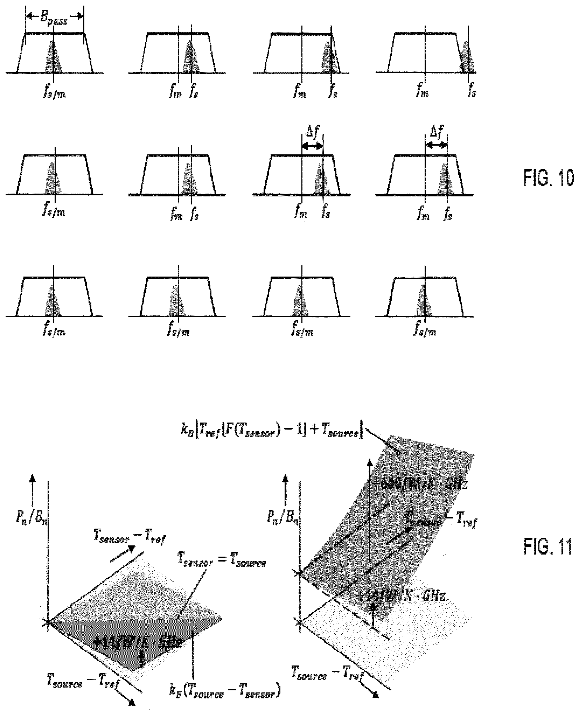

In Fig. 10, a signal frequency tracking scheme according to the invention is shown. Due to environmental issues, e.g. temperature rise, etc., differences between the signal mid-frequency and the frequency of the local oscillator f_{LO} may vary, which results in a shift of the frequency spectrum of the signal at the input of the filtering unit. Since the mid-frequency fₘ of the filtering unit will stay fixed, the unwanted effect according to the upper row of Fig. 10 is obtained, where the signal is distorted by the filtering unit, if the offset between filtering frequency and signal frequency exceeds a certain threshold value. The signal leaves the filter path band, so that it is attenuated, which leads to a systematic measurement failure. The middle row in Fig. 10 shows a regulation according to prior art schemes. Due to the properties of a classical automatic frequency control AFC there is always an offset between filtering frequency and signal frequency, if there is a linear shift over time between both frequencies.

According to the invention, no regulation is applied. Instead a regression analysis with additional extrapolation is applied, leading to a maximum-likelihood assumption and a complete tracking of the signal frequency. This is accomplished by a separate receive channel after the digital response channel. As a result, no regulation offset is obtained and the accuracy of the measurement is largely increased.

Fig. 11 shows a comparison of a specific temperature-dependent noise power between a known power detector (left part) and the power detection mode of the sensor according to the invention (right part). The results herein are defined for a specific bandwidth. Accordingly, the classical power detector comprises a less dynamic temperature noise power dependency. The lowest measuring level for a known detector is approximately 100 Picowatts / -70 dBm. The inventive power detection is possible until 0.3 Femtowatts /-95 dBm for a bandwidth B_{RF} of 100 Megahertz and 0.1 Femtowatts / -130 dBm for a bandwidth B_{RF} of 10 Megahertz of the filtering unit.

It is therefore wise to measure wideband signals with the second operating mode and narrowband signals with the first operating mode.

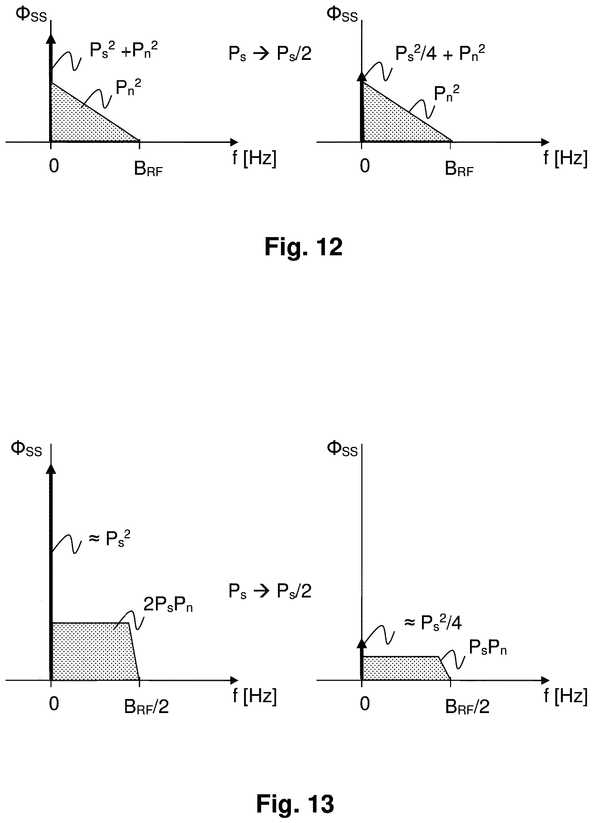

Fig. 12 shows the noise scheme of the inventive sensor at a low input power level. The noise power Pₙ² at the output of the squaring unit stays the same when the signal power Pₛ² is reduced (here factor ½). The absolute measurement noise is independent of the signal power. A reduction of the power by factor X increases the relative part of the measurement noise in comparison to the mean power also by factor X.

In contrast, Fig. 13 shows the noise scheme of the inventive sensor at a high input power level. The absolute measurement noise power value is proportional to the signal power. A reduction of the signal power by factor X increases the relative part of the measurement noise in comparison to the mean power only by factor square root of X. Therefore the change of the relative noise content is a function of the signal power.

As a conclusion, if small power signals are applied to the sensor 1, the noise dependency is greater.

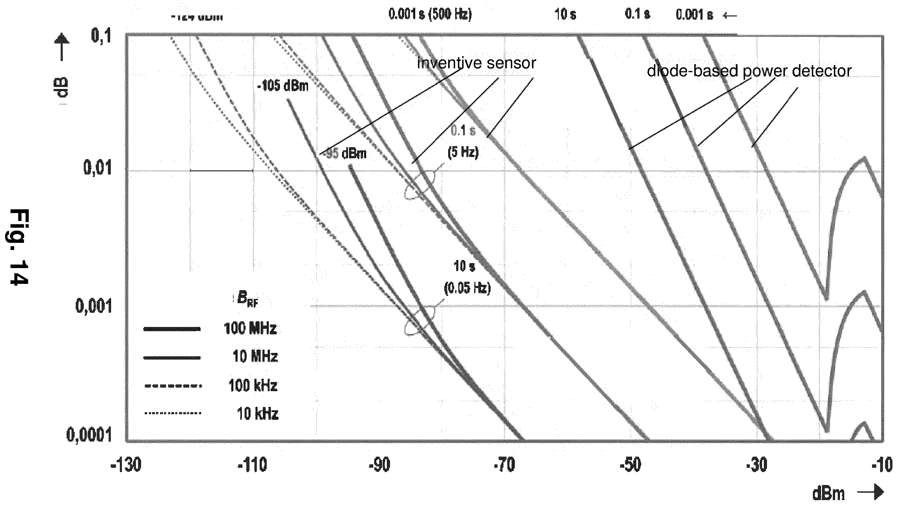

Fig. 14 shows the relative signal noise power in Decibel versus signal power in dBm at different filtering bandwidths B_{RF} and with different measuring times. The input RF signals are sine signals. The inventive sensor 1 is highly accurate compared to a prior art power detector using diode-based sensing elements. Using the inventive sensor, a lower measuring limit of -130 dBm is detectable, wherein the known detectors obtain -50 dBm.

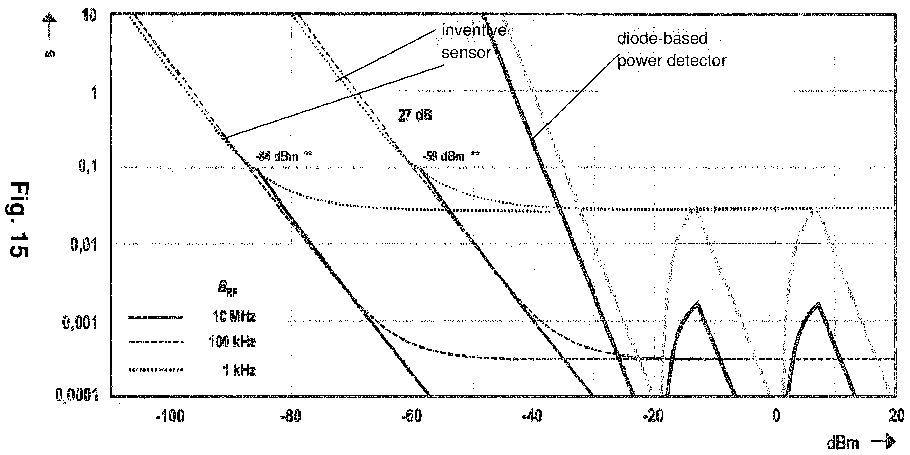

Fig. 15 shows a measurement time scheme of the inventive sensor at different filtering bandwidths B_{RF} of a continuous wave signal. The portion of noise is 0.01 Decibel (2·σ), wherein the minimum power of the signal is chosen to obtain a zero drift that is no more than 0.01 Decibel per Kelvin. Fig. 15 shows an achievable measurement time in seconds versus signal power in dBm. The inventive sensor 1 is faster compared to a prior art power detector using diode-based sensing elements. Using the inventive sensor, a lower measuring limit of -86 dBm is detectable at 0.1 seconds measuring time. The inventive sensor 1 can be pre-attenuated by a pre-attenuation unit. By using a pre-attenuation of 27 dB a measuring limit of - 59 dBm at 0.1 seconds measuring time is achievable, wherein the known detectors is less than -40 dBm.

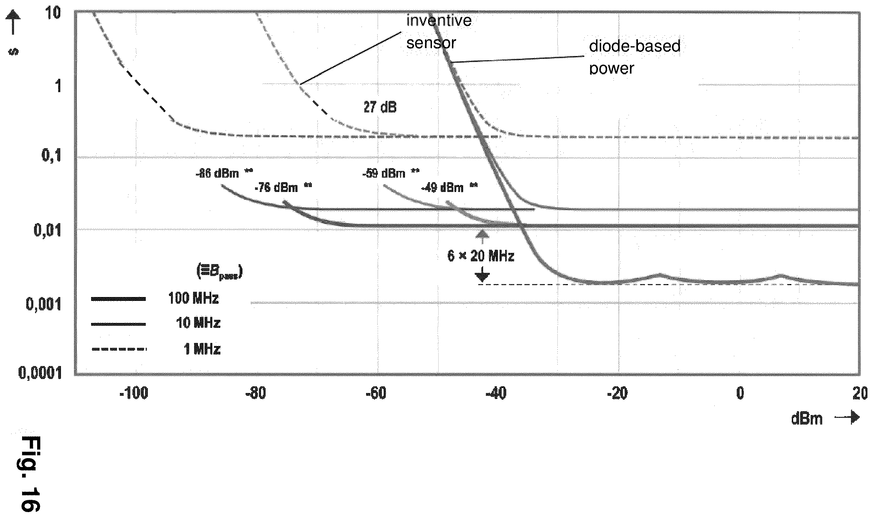

Fig. 16 shows the measurement time scheme of the inventive sensor at different signal bandwidths Bₚₐₛₛ of an Additive White Gaussian Noise signal, short AWGN-signal. The filter setting of the root-raised cosine filter has been selected equally to the noise power bandwidth of the input signal.

The relative portion of noise is 0.02 Decibel (2·σ), wherein the minimum power of the signal is chosen to obtain a zero drift that is no more than 0.01 Decibel per Kelvin. The inventive sensor 1 is more sensitive compared to a prior art power detector using diode-based sensing elements. Using the inventive sensor 1 with activated pre attenuation of 27 Decibel, the measurement times are equal but the inventive sensor 1 comprises a higher dynamic range, which is shown with dotted lines in Fig. 16.

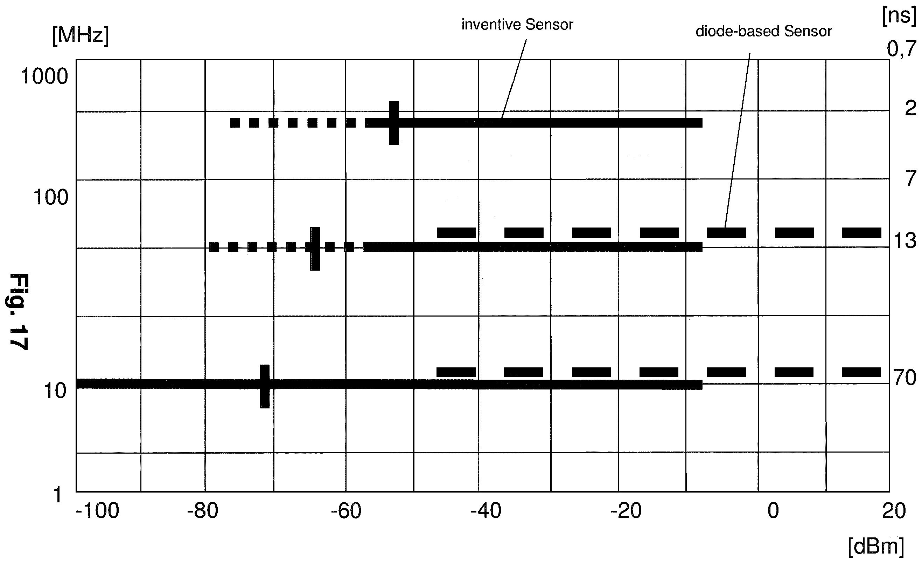

Fig. 17 shows the dynamic range of the inventive sensor 1 in trace mode compared to sensors using diode-based elements. In the two upper characteristic curves the inventive sensor 1 operates in the second operating mode. Due to the local oscillator leakage the lower measurement value is limited.

The inventive sensor provided herein is not comparable to other measurement devices or sensing devices. The sensitivity and dynamic ranges are highly increased, wherein at the same time the complexity is drastically reduced.

The inventive sensor is useful as a combining device, such as signal analyzing, spectral analyzing, vector analyzing and power analyzing device in a single device.

All embodiments described, shown and/or claimed herein can be combined with each.

Additional advantages and modifications will readily occur to those skilled in the art. Therefore the invention in its broader aspects is not limited to the specific details and representative embodiments shown and described herein.

Accordingly, various modifications may be made without departing from the scope of the general inventive concept as defined by the appended claims.

## Claims

1. A frequency-converting sensor (1, 1a, 1b) for providing at least a radio frequency signal parameter, which is an electrical power value, the sensor (1, 1a, 1b) comprising:
- an analog receiving section for converting an input signal into corresponding I/Q-values using a local oscillator frequency;
- an analog to digital converting unit for converting the corresponding analog I/Q-values into digital I/Q-values; and
- a digital processing unit comprising:
- an adjustable filtering unit for selecting a frequency band of the radio frequency signal; and
- a calculating unit for calculating at least an electrical power value from the I/Q-values of the selected frequency band,
wherein the sensor (1, 1a, 1b) is configured to obtain its energy supply via a bidirectional data interface, which is a Universal Serial Bus interface or a local-area-network interface, and
**characterized in that** the sensor (1, 1a, 1b) is operable in at least a first operating mode and a second operating mode, the first operating mode is a normal receiving mode with an intermediate frequency of the sensor (1, 1a, 1b) and the second operating mode is a single receive-band receiving mode with a down-conversion to zero hertz, wherein at least the filtering unit is deactivated.

2. The frequency-converting sensor (1, 1a, 1b) according to claim 1,
wherein the sensor (1, 1a, 1b) is configured to provide the electrical power value via a web-based interface.

3. The frequency-converting sensor (1, 1a, 1b) according to claim 1 or 2,
wherein the sensor (1, 1a, 1b) is switchable in-between the first operating mode and the second operating mode.

4. The frequency-converting sensor (1, 1a, 1b) according to claim 3,
wherein the second operating mode is configured to be selected for input signals comprising a bandwidth higher than the bandwidth of an intermediate frequency and/or for input signals with an electrical power value above a predefined threshold value.

5. The frequency-converting sensor (1, 1a, 1b) according to any of claims 1 to 4,
wherein the digital unit further comprises a frequency shifting unit for digitally shifting the digital I/Q-values with an intermediate frequency signal and wherein the frequency shifting unit is arranged in-between the analog to digital converting unit and the filtering unit.

6. The frequency-converting sensor (1, 1a, 1b) according to claim 5,
wherein the frequency shifting unit is configured to be activated in a first operating mode of the sensor.

7. The frequency-converting sensor (1, 1a, 1b) according to any of claims 1 to 6,
wherein the analog receiving section comprises an anti-aliasing-filter, wherein the anti-aliasing filter is activated in a first operating mode of the sensor (1, 1a, 1b).

8. The frequency-converting sensor (1, 1a, 1b) according to claim 1,
wherein the sensor (1, 1a, 1b) further comprises a local frequency oscillator signal interface for applying the local oscillator frequency signal.

9. The frequency-converting sensor (1, 1a, 1b) according to any of claims 1 to 8,
wherein the sensor (1, 1a, 1b) comprises a first signal interface for applying the input signal, a second signal interface for at least providing the electrical power value of the input signal and at least a third interface for providing the digitized I/Q-values for further signal analyzing.

10. The frequency-converting sensor (1, 1a, 1b) according to claim 9,
wherein the sensor (1, 1a, 1b) comprises a fourth interface for providing and/or applying a system-clock signal and/or a triggering signal and/or a reference signal.

11. A system for analyzing a radio frequency signal, the system comprising:
- a device under test generating the radio frequency signal;
- at least one frequency-converting sensor (1, 1a, 1b) according to any of claims 1 to 10, providing at least a radio frequency signal parameter which is an electrical power value; and
- a display device configured to display the radio frequency signal parameter.

12. The system according to claim 11,
wherein the device under test is directly connected to a first interface of the at least one frequency-converting sensor (1, 1a, 1b).

13. The system according to claim 11 or 12,
wherein the display device is contactless or contact-based connected to a second interface of the at least one frequency-converting sensor (1, 1a, 1b).

14. The system according to any of claims 11 to 13, wherein the display device is incorporated into a at least one frequency-converting sensor (1, 1a, 1b) configured to further provide digitized I/Q-values via the second interface or via a third interface.

15. The system according to any of claims 11 to 14, wherein the at least one frequency-converting sensor (1, 1a, 1b) is a first frequency-converting sensor;
wherein the system comprises at least a second frequency-converting sensor (1, 1a, 1b);
wherein the first sensor (1, 1a, 1b) is configured to supply a trigger-signal to the second sensor (1, 1a, 1b) or vice versa;
wherein the first sensor (1, 1a, 1b) is configured to supply a system clock-signal to the second sensor (1, 1a, 1b) or vice versa;
wherein the first sensor (1, 1a, 1b) is configured to supply a local oscillator frequency signal to the second sensor (1, 1a, 1b) or vice versa; and
wherein the system is adapted to be used for vector-based measurements.

16. The system according to any of claims 11 to 15, wherein the at least one frequency-converting sensor (1, 1a, 1b) is a first frequency-converting sensor;
wherein the system comprises at least a second frequency-converting sensor (1, 1a, 1b);
wherein the first sensor (1, 1a, 1b) is configured to supply a trigger-signal to the second sensor (1, 1a, 1b) or vice versa;
wherein the first sensor (1, 1a, 1b) is configured to supply a system clock-signal to the second sensor (1, 1a, 1b) or vice versa; and
wherein the system is adapted to be used for time-domain system measurements.

17. The system according to claim 15 or 16,
wherein a reference signal is adapted to be provided to the first sensor (1, 1a, 1b) or the second sensor (1, 1a, 1b).

18. The system according to any of claims 11 to 17, wherein the at least one frequency-converting sensor (1, 1a, 1b) is a first frequency-converting sensor (1, 1a, 1b);
wherein the system comprises at least a second frequency-converting sensor (1, 1a, 1b);
wherein the first sensor (1, 1a, 1b) is configured to supply a trigger-signal to the second sensor (1, 1a, 1b) or vice versa;
wherein a reference signal is adapted to be provided to the first sensor (1, 1a, 1b) and the second sensor (1, 1a, 1b); and
wherein the system is adapted to be used for time-domain system measurements.

19. The system according to any of claims 11 to 18, wherein the display device is incorporated into a measurement device;
wherein the at least one frequency-converting sensor (1, 1a, 1b) is a first frequency-converting sensor (1, 1a, 1b);
wherein the system comprises at least a second frequency-converting sensor (1, 1a, 1b);
wherein the first sensor (1, 1a, 1b) and the second sensor (1, 1a, 1b) are configured to further provide digitized I/Q-values to the measurement device for time-domain system measurements.

## Patentansprüche

1. Frequenzkonvertierender Sensor (1, 1a, 1b) zur Bereitstellung mindestens eines Funkfrequenzsignalparameters, welcher ein elektrischer Stromwert ist, wobei der Sensor (1, 1a, 1b) umfasst:
- einen analogen Empfangsabschnitt zum Konvertieren eines Eingangssignals in entsprechenden I/Q-Werte unter Verwendung einer lokalen Empfangsoszillatorfrequenz;
- einen Analog-Digital-Wandler zum Wandeln der entsprechenden analogen I/Q-Werte in digitale I/Q-Werte; und
- eine digitale Verarbeitungseinheit mit:
- einer einstellbaren Filtereinheit zum Auswählen eines Frequenzbandes des Funkfrequenzsignals; und
- einer Berechnungseinheit zum Berechnen mindestens eines elektrischen Stromwertes aus den I/Q-Werten des ausgewählten Frequenzbandes,
wobei
der Sensor (1, 1a, 1b) dafür konfiguriert ist, seine Energieversorgung über eine bidirektionale Datenschnittstelle zu erhalten, welche eine Universal-Serial-Bus-Schnittstelle oder eine Local-Area-Network-Schnittstelle ist, und
**dadurch gekennzeichnet, dass**
der Sensor (1, 1a, 1b) in einer ersten Betriebsart und einer zweiten Betriebsart betrieben werden kann,
die erste Betriebsart eine normale Empfangsbetriebsart mit einer Zwischenfrequenz des Sensors (1, 1a, 1b) ist und
die zweite Betriebsart eine Einzelempfangsband-Empfangsbetriebsart mit einer Abwärtskonvertierung auf null Hertz ist,
wobei zumindest die Filtereinheit deaktiviert wird.

2. Frequenzkonvertierender Sensor (1, 1a, 1b) nach Anspruch 1,
wobei der Sensor (1, 1a, 1b) dafür konfiguriert ist, den elektrischen Stromwert über eine netzbasierte Schnittstelle bereitzustellen.

3. Frequenzkonvertierender Sensor (1, 1a, 1b) nach Anspruch 1 oder 2,
wobei der Sensor (1, 1a, 1b) zwischen der ersten Betriebsart und der zweiten Betriebsart umschaltbar ist.

4. Frequenzkonvertierender Sensor (1, 1a, 1b) nach Anspruch 3,
wobei die zweite Betriebsart dafür konfiguriert ist, für Eingangssignale mit einer größeren Bandbreite als die Bandbreite einer Zwischenfrequenz und/oder für Eingangssignale mit einem elektrischen Stromwert über einem vorgegebenen Schwellenwert ausgewählt zu werden.

5. Frequenzkonvertierender Sensor (1, 1a, 1b) nach einem der Ansprüche 1 bis 4,
wobei die digitale Einheit ferner eine Frequenzverschiebungseinheit zum digitalen Verschieben der digitalen I/Q-Werte mit einem Zwischenfrequenzsignal umfasst und wobei die Frequenzverschiebungseinheit zwischen dem Analog-Digital-Wandler und der Filtereinheit angeordnet ist.

6. Frequenzkonvertierender Sensor (1, 1a, 1b) nach Anspruch 5,
wobei die Frequenzverschiebungseinheit dafür konfiguriert ist, in einer ersten Betriebsart des Sensors aktiviert zu werden.

7. Frequenzkonvertierender Sensor (1, 1a, 1b) nach einem der Ansprüche 1 bis 6,
wobei der analoge Empfangsabschnitt einen Anti-Aliasing-Filter umfasst, wobei der Anti-Aliasing-Filter in einer ersten Betriebsart des Sensors (1, 1a, 1b) aktiviert wird.

8. Frequenzkonvertierender Sensor (1, 1a, 1b) nach Anspruch 1,
wobei der Sensor (1, 1a, 1b) ferner eine lokale Frequenzoszillator-Signalschnittstelle zum Zuführen des lokalen Empfangsoszillatorfrequenz-Signals umfasst.

9. Frequenzkonvertierender Sensor (1, 1a, 1b) nach einem der Ansprüche 1 bis 8,
wobei der Sensor (1, 1a, 1b) eine erste Signalschnittstelle zum Zuführen des Eingangssignals, eine zweite Signalschnittstelle zumindest zum Bereitstellen des elektrischen Stromwertes des Eingangssignals und zumindest eine dritte Schnittstelle zum Bereitstellen der digitalisierten I/Q-Werte für die weitere Signalanalyse umfasst.

10. Frequenzkonvertierender Sensor (1, 1a, 1b) nach Anspruch 9,
wobei der Sensor (1, 1a, 1b) eine vierte Schnittstelle zum Bereitstellen und/oder Zuführen eines Systemtaktsignals und/oder eines Auslösesignals und/oder eines Bezugssignals umfasst.

11. System zur Analyse eines Funkfrequenzsignals, wobei das System umfasst:
- eine zu testende Vorrichtung, die das Funkfrequenzsignal erzeugt;
- zumindest einen frequenzkonvertierenden Sensor (1, 1a, 1b) nach einem der Ansprüche 1 bis 10, der zumindest einen Funkfrequenzsignalparameter bereitstellt, welcher ein elektrischer Stromwert ist; und
- eine Anzeigevorrichtung, die dafür konfiguriert ist, den Funkfrequenzsignalparameter anzuzeigen.

12. System nach Anspruch 11,
wobei die zu testende Vorrichtung direkt mit einer ersten Schnittstelle des zumindest einen frequenzkonvertierenden Sensors (1, 1a, 1b) verbunden ist.

13. System nach Anspruch 11 oder 12,
wobei die Anzeigevorrichtung kontaktlos oder kontaktbasiert mit einer zweiten Schnittstelle des zumindest einen frequenzkonvertierenden Sensors (1, 1a, 1b) verbunden ist.

14. System nach einem der Ansprüche 11 bis 13,
wobei die Anzeigevorrichtung in zumindest einen frequenzkonvertierenden Sensor (1, 1a, 1b) integriert ist, der dafür konfiguriert ist, ferner digitalisierte I/Q-Werte über die zweite Schnittstelle oder über eine dritte Schnittstelle bereitzustellen.

15. System nach einem der Ansprüche 11 bis 14,
wobei der zumindest eine frequenzkonvertierende Sensor (1, 1a, 1b) ein erster frequenzkonvertierender Sensor ist;
wobei das System zumindest einen zweiten frequenzkonvertierenden Sensor (1, 1a, 1b) umfasst;
wobei der erste Sensor (1, 1a, 1b) dafür konfiguriert ist, dem zweiten Sensor (1, 1a, 1b) ein Auslösesignal zuzuführen oder umgekehrt;
wobei der erste Sensor (1, 1a, 1b) dafür konfiguriert ist, dem zweiten Sensor (1, 1a, 1b) ein Systemtaktsignal zuzuführen oder umgekehrt;
wobei der erste Sensor (1, 1a, 1b) dafür konfiguriert ist, dem zweiten Sensor (1, 1a, 1b) ein lokales Empfangsoszillatorfrequenz-Signal zuzuführen oder umgekehrt; und
wobei das System dafür ausgelegt ist, für vektorbasierte Messungen verwendet zu werden.

16. System nach einem der Ansprüche 11 bis 15,
wobei der zumindest eine frequenzkonvertierende Sensor (1, 1a, 1b) ein erster frequenzkonvertierender Sensor ist;
wobei das System zumindest einen zweiten frequenzkonvertierenden Sensor (1, 1a, 1b) umfasst;
wobei der erste Sensor (1, 1a, 1b) dafür konfiguriert ist, dem zweiten Sensor (1, 1a, 1b) ein Auslösesignal zuzuführen oder umgekehrt;
wobei der erste Sensor (1, 1a, 1b) dafür konfiguriert ist, dem zweiten Sensor (1, 1a, 1b) ein Systemtaktsignal zuzuführen oder umgekehrt; und
wobei das System dafür ausgelegt ist, für Zeitbereichssystem-Messungen verwendet zu werden.

17. System nach Anspruch 15 oder 16,
wobei ein Bezugssignal dafür ausgelegt ist, dem ersten Sensor (1, 1a, 1b) bzw. dem zweiten Sensor (1, 1a, 1b) bereitgestellt zu werden.

18. System nach einem der Ansprüche 11 bis 17,
wobei der zumindest eine frequenzkonvertierende Sensor (1, 1a, 1b) ein erster frequenzkonvertierender Sensor (1, 1a, 1b) ist;
wobei das System zumindest einen zweiten frequenzkonvertierenden Sensor (1, 1a, 1b) umfasst;
wobei der erste Sensor (1, 1a, 1b) dafür konfiguriert ist, dem zweiten Sensor (1, 1a, 1b) ein Auslösesignal zuzuführen oder umgekehrt;
wobei ein Bezugssignal dafür ausgelegt ist, dem ersten Sensor (1, 1a, 1b) und dem zweiten Sensor (1, 1a, 1b) bereitgestellt zu werden; und
wobei das System dafür ausgelegt ist, für Zeitbereichssystem-Messungen verwendet zu werden.

19. System nach einem der Ansprüche 11 bis 18,
wobei die Anzeigevorrichtung in eine Messvorrichtung integriert ist;
wobei der zumindest eine frequenzkonvertierende Sensor (1, 1a, 1b) ein erster frequenzkonvertierender Sensor (1, 1a, 1b) ist;
wobei das System zumindest einen zweiten frequenzkonvertierenden Sensor (1, 1a, 1b) umfasst;
wobei der erste Sensor (1, 1a, 1b) und der zweite Sensor (1, 1a, 1b) dafür konfiguriert sind, der Messvorrichtung ferner digitalisierte I/Q-Werte für Zeitbereichssystem-Messungen bereitzustellen.

## Revendications

1. Capteur (1, 1a, 1b) de conversion de fréquence permettant de fournir au moins un paramètre de signal radiofréquence, à savoir une valeur de puissance électrique, le capteur (1, 1a, 1b) comprenant :
- une section de réception analogique destinée à convertir un signal d'entrée en des valeurs I/Q correspondantes en utilisant une fréquence d'oscillateur local ;
- une unité de conversion analogique-numérique destinée à convertir les valeurs I/Q analogiques correspondantes en des valeurs I/Q numériques ; et
- une unité de traitement numérique comprenant :
- une unité de filtrage réglable destinée à sélectionner une bande de fréquence du signal radiofréquence ; et
- une unité de calcul destinée à calculer au moins une valeur de puissance électrique à partir des valeurs I/Q de la bande de fréquence sélectionnée,
dans lequel
le capteur (1, 1a, 1b) est configuré de manière à obtenir son alimentation en énergie par l'intermédiaire d'une interface de données bidirectionnelle, qui est une interface de bus série universel ou une interface de réseau local, et
**caractérisé en ce que** le capteur (1, 1a, 1b) est exploitable dans au moins un premier mode de fonctionnement et un second mode de fonctionnement,
le premier mode de fonctionnement est un mode de réception normal avec une fréquence intermédiaire du capteur (1, 1a, 1b) et
le second mode de fonctionnement est un mode de réception à bande de réception unique avec une conversion descendante vers zéro hertz,
dans lequel au moins l'unité de filtrage est désactivée.

2. Capteur (1, 1a, 1b) de conversion de fréquence selon la revendication 1,
dans lequel le capteur (1, 1a, 1b) est configuré de manière à fournir la valeur de puissance électrique par l'intermédiaire d'une interface web.

3. Capteur (1, 1a, 1b) de conversion de fréquence selon la revendication 1 ou 2,
dans lequel le capteur (1, 1a, 1b) est commutable entre le premier mode de fonctionnement et le second mode de fonctionnement.

4. Capteur (1, 1a, 1b) de conversion de fréquence selon la revendication 3,
dans lequel le second mode de fonctionnement est configuré de manière à être sélectionné pour des signaux d'entrée comprenant une largeur de bande supérieure à la largeur de bande d'une fréquence intermédiaire et/ou pour des signaux d'entrée avec une valeur de puissance électrique supérieure à une valeur de seuil prédéfinie.

5. Capteur (1, 1a, 1b) de conversion de fréquence selon l'une quelconque des revendications 1 à 4,
dans lequel l'unité numérique comprend en outre une unité de décalage de fréquence pour décaler numériquement les valeurs I/Q numériques avec un signal de fréquence intermédiaire et dans lequel l'unité de décalage de fréquence est agencée entre l'unité de conversion analogique-numérique et l'unité de filtrage.

6. Capteur (1, 1a, 1b) de conversion de fréquence selon la revendication 5,
dans lequel l'unité de décalage de fréquence est configurée pour être activée dans un premier mode de fonctionnement du capteur.

7. Capteur (1, 1a, 1b) de conversion de fréquence selon l'une quelconque des revendications 1 à 6,
dans lequel la section de la réception analogique comprend un filtre anticrénelage, dans lequel le filtre anticrénelage est activé dans un premier mode de fonctionnement du capteur (1, 1a, 1b).

8. Capteur (1, 1a, 1b) de conversion de fréquence selon la revendication 1,
dans lequel le capteur (1, 1a, 1b) comprend en outre une interface de signal d'oscillateur de fréquence local pour appliquer le signal de fréquence d'oscillateur local.

9. Capteur (1, 1a, 1b) de conversion de fréquence selon l'une quelconque des revendications 1 à 8,
dans lequel le capteur (1, 1a, 1b) comprend une première interface de signal pour appliquer le signal d'entrée, une deuxième interface de signal permettant de fournir au moins la valeur de puissance électrique du signal d'entrée et au moins une troisième interface permettant de fournir les valeurs I/Q numérisées à des fins d'analyse de signal ultérieure.

10. Capteur (1, 1a, 1b) de conversion de fréquence selon la revendication 9,
dans lequel le capteur (1, 1a, 1b) comprend une quatrième interface permettant de fournir et/ou d'appliquer un signal d'horloge de système et/ou un signal de déclenchement et/ou un signal de référence.

11. Système destiné à analyser un signal radiofréquence, le système comprenant :
- un dispositif mis à l'essai générant le signal radiofréquence ;
- au moins un capteur (1, 1a, 1b) de conversion de fréquence selon l'une quelconque des revendications 1 à 10, fournissant au moins un paramètre de signal radiofréquence à savoir une valeur de puissance électrique ; et
- un dispositif d'affichage configuré de manière à afficher le paramètre de signal radiofréquence.

12. Système selon la revendication 11,
dans lequel le dispositif à l'essai est directement connecté à une première interface du au moins un capteur (1, 1a, 1b) de conversion de fréquence.

13. Système selon la revendication 11 ou 12,
dans lequel le dispositif d'affichage est connecté sans contact ou par contact à une deuxième interface du au moins un capteur (1, 1a, 1b) de conversion de fréquence.

14. Système selon l'une quelconque des revendications 11 à 13,
dans lequel le dispositif d'affichage est incorporé dans un au moins un capteur (1, 1a, 1b) de conversion de fréquence configuré de manière à fournir en outre des valeurs I/Q numérisées par l'intermédiaire de la deuxième interface ou par l'intermédiaire d'une troisième interface.

15. Système selon l'une quelconque des revendications 11 à 14,
dans lequel le au moins un capteur (1, 1a, 1b) de conversion de fréquence est un premier capteur de conversion de fréquence ;
dans lequel le système comprend au moins un second capteur (1, 1a, 1b) de conversion de fréquence ;
dans lequel le premier capteur (1, 1a, 1b) est configuré de manière à fournir un signal de déclenchement au second capteur (1, 1a, 1b) ou inversement ;
dans lequel le premier capteur (1, 1a, 1b) est configuré de manière à fournir un signal d'horloge de système au second capteur (1, 1a, 1b) ou inversement ;
dans lequel le premier capteur (1, 1a, 1b) est configuré de manière à fournir un signal de fréquence d'oscillateur local au second capteur (1, 1a, 1b) ou inversement ; et
dans lequel le système est adapté pour être utilisé pour des mesures à base de vecteurs.

16. Système selon l'une quelconque des revendications 11 à 15,
dans lequel le au moins un capteur (1, 1a, 1b) de conversion de fréquence est un premier capteur de conversion de fréquence ;
dans lequel le système comprend au moins un second capteur (1, 1a, 1b) de conversion de fréquence ;
dans lequel le premier capteur (1, 1a, 1b) est configuré de manière à fournir un signal de déclenchement au second capteur (1, 1a, 1b) ou inversement ;
dans lequel le premier capteur (1, 1a, 1b) est configuré de manière à fournir un signal d'horloge de système au second capteur (1, 1a, 1b) ou inversement ; et
dans lequel le système est adapté pour être utilisé pour des mesures de système dans le domaine temporel.

17. Système selon la revendication 15 ou 16,
dans lequel signal de référence est adapté pour être fourni au premier capteur (1, 1a, 1b) ou au second capteur (1, 1a, 1b).

18. Système selon l'une quelconque des revendications 11 à 17, dans lequel le au moins un capteur (1, 1a, 1b) de conversion de fréquence est un premier capteur (1, 1a, 1b) de conversion de fréquence ;
dans lequel le système comprend au moins un second capteur (1, 1a, 1b) de conversion de fréquence ;
dans lequel le premier capteur (1, 1a, 1b) est configuré de manière à fournir un signal de déclenchement au second capteur (1, 1a, 1b) ou inversement ;
dans lequel signal de référence est adapté pour être fourni au premier capteur (1, 1a, 1b) et au second capteur (1, 1a, 1b) ; et
dans lequel le système est adapté pour être utilisé pour des mesures de système dans le domaine temporel.

19. Système selon l'une quelconque des revendications 11 à 18, dans lequel le dispositif d'affichage est incorporé dans un dispositif de mesure ;
dans lequel le au moins un capteur (1, 1a, 1b) de conversion de fréquence est un premier capteur (1, 1a, 1b) de conversion de fréquence ;
dans lequel le système comprend au moins un second capteur (1, 1a, 1b) de conversion de fréquence ;
dans lequel le premier capteur (1, 1a, 1b) et le second capteur (1, 1a, 1b) sont configurés pour fournir en outre des valeurs I/Q numérisées au dispositif de mesure pour des mesures de système de domaine temporel.
